# EUROPÄISCHE PATENTSCHRIFT

(11) **EP 0 538 598 B1**
(45) Veröffentlichungstag und Bekanntmachung des Hinweises auf die Patenterteilung: **27.03.1996**
(21) Anmeldenummer: 92115018.1
(22) Anmeldetag: 03.09.1992
(51) Int. Cl.: A62D 3/00, C02F 1/62

(54) **Verfahren zur Umwandlung von wasserlöslichen in in Wasser schwer- oder nichtlösliche Schwermetallverbindungen**
Process for converting water soluble heavy metal compounds into water insoluble, or sparingly soluble, compounds
Procédé de transformation des composés de métaux lourds solubles dans l'eau en composés insolubles ou peu solubles dans l'eau

(30) Priorität: 25.10.1991 AT 2131/91
(43) Veröffentlichungstag der Anmeldung: 28.04.1993
(73) Patentinhaber: AUSTRIAN ENERGY & ENVIRONMENT SGP/WAAGNER-BIRO GmbH, A-1210 Wien (AT)
(72) Erfinder: Freiszler, Hannelore, A-8570 Voitsberg (AT); Wilfing, Rudolf, Dr., A-8700 Leoben (AT); Lindbauer, Ralf, Dr., A-8045 Graz (AT); Glasner, Alfred, Dipl.-Ing., A-8162 Passail 237 (AT)
(74) Vertreter: Wallner, Gerhard, Dipl.-Ing.

(56) Entgegenhaltungen:
- GB-A- 2 040 905
- DATABASE WPIL Section Ch, Week 8329, Derwent Publications Ltd., London, GB; Class D04, AN 83-714134
- DATABASE WPIL Section Ch, Week E13, Derwent Publications Ltd., London, GB;
- PATENT ABSTRACTS OF JAPAN vol. 05, no. 132 (C-68)22. August 1981
- PATENT ABSTRACTS OF JAPAN vol. 12, no. 297 (C-519)12. August 1988
- PATENT ABSTRACTS OF JAPAN vol. 03, no. 084 (M-066)20. Juli 1979

## Beschreibung

Die Erfindung betrifft ein Verfahren zur Umwandlung und gleichzeitiger Immobilisierung von wasserlöslichen Schwermetallverbindungen, wie z. B. Bleiverbindungen, in im Flüssigkeitsbad eines Entschlackers abgekühlten Schlacken in in Wasser schwer- und nichtlösliche Schwermetallverbindungen, beispielsweise in einer Müllverbrennungsanlage.

Aus der JP-A-56 067 572 ist es bekannt, heiße Flugaschen in einem Wasserbad zu verfestigen, wobei durch den Alkaligehalt der Flugaschen PH-Wert abhängig lösliche Schwermetalle von der Flüssigkeit eluiert werden. Wird in die Flüssigkeit Rauchgas eingeblasen, wird Alkali abgebunden und die Schwermetalle bleiben infolge der geringeren Alkalität in den Aschen.

Aus den JP-A-58 098 185 und JP-A-57 030 594 ist es bekannt, daß Schwermetallverbindungen aus Aschen ausgelaugt werden und daß diese Lösung dann entsprechend behandelt wird, sodaß die Schwermetallsalze ausfallen.

Die WO 89/11912 betrifft die Auslaugestufe einer Schlackenreinigung um schadstofffreie Baustoffe zu erzeugen.

Die Erfindung hat es sich zur Aufgabe gestellt, das Entsorgungsproblem derartiger Flüssigkeiten und Schlacken zu vereinfachen und die Oberflächen der Schlackenkörper zu immobilisieren und gleichzeitig den Gehalt an gelösten Schwermetallverbindungen in der Entschlackungsflüssigkeit zu senken.

Die Erfindung ist dadurch gekennzeichnet, daß dem Flüssigkeitsbad vor der Schlacken aufgabe, insbesondere Schlackenabkühlung als chemische Puffer wirkende Zusätze zugeführt werden, die den pH-Wert der Flüssigkeit kleiner als 11, insbesondere zwischen 10,5 und 7 halten, wobei die Zusätze mit den gelösten und ungelösten löslichen Schwermetallverbindungen der Schlacken, wie z. B. Oxiden oder Hydroxiden, schwerlösliche Verbindungen, wie Karbonate oder Sulfate bilden, die vorzugsweise als Sediment abgeschieden werden, daß die vom Flüssigkeitsbad des Entschlackers abgeführte Flüssigkeit in eine feststoffreiche und eine feststoffarme Fraktion, beispielsweise mittels eines Hydrozyklons, getrennt wird und die feststoffarme Fraktion in den Entschlacker rückgeführt wird. Vorteilhaft werden als Zusätze Schwefelsäure, insbesondere Abfallschwefelsäure, oder Hydrogenkarbonate oder wird C0- oder C0₂-hältiges Gas wie z. B. gereinigtes Rauchgas mit 5 bis 15 % C0₂-Gehalt verwendet. Dieses Gas wird in einem Naßwäscher in Kontakt mit der Flüssigkeit gebracht, wodurch es teilweise gelöst wird. Weitere wesentliche Merkmale sind in den Unteransprüchen 5 bis 8 angegeben.

Die besonders gute Wirkung des erfindungsgemäßen Verfahrens erklärt sich durch die pH-Wert-Pufferung der Entschlackungsflüssigkeit, die im allgemeinen sehr basisch ist, sodaß die Flüssigkeit weniger leicht lösliche Verbindungen aufnimmt, und durch die chemische Ionenreaktion die gelösten Ionen sich in unlösliche oder schwerlösliche Verbindungen umwandeln, und somit teilweise abscheidbar sind. Die nicht gelösten Schwermetallsalze reagieren ebenfalls, so daß sie nach der Behandlung nicht mehr in Wasser eluierbar sind. Hiezu wird die aus dem Entschlacker austretende mehr oder weniger trockene Schlacke durch eine entsprechend gepufferte Flüssigkeit benetzt, so daß auch die anfallende Schlacke (die anfallende Flüssigkeit wird in den Entschlacker zurückgeführt) umweltfreundliche Aspekte aufweist, so daß sie in eine besondere Deponieklasse, beispielsweise nach ÖNorm S 2072, fällt. Die Erfindung ist somit auf Schlacken anwendbar, soweit es sich um die Lösung des Schwermetallprobems, also hauptsächlich um lösbare Kupfer-, Kadmium-, Blei-, Silber- und auch Zink-Verbindungen handelt. Diese Schwermetalle liegen in den Schlacken meist als Oxyde vor, die mehr oder minder leicht lösbar sind und sich in Gegenwart von H₂O teilweise in noch besser lösliche Hydroxyde umwandeln. Durch die Behandlung mit der gepufferten Lösung bilden sich schwerlösliche Karbonate oder Sulfate, die in der Flüssigkeit ausfallen, und beispielsweise durch Hydrozyklone in feststoffarme und feststoffreiche Fraktionen getrennt werden können. Um die feinkörniger Fraktionen besser ausscheiden zu können, wird der Flüssigkeit ein Fällungsmittel wie z.B. TMT15 zugesetzt, so daß die von den Feststoffen gereinigte Flüssigkeit in den Entschlacker rückgeführt werden kann. Zur Absenkung des pH-Wertes werden der Entschlackerflüssigkeit vor ihrem Eintritt in den Entschlacker Zusätze wie z.B. Schwefelsäure, die nicht unbedingt rein sein muß, also Abfallschwefelsäure, zur Bildung von Schwermetallsulfaten oder auch Hydrogenkarbonaten wie z.B. NaHCO₃ oder KHCO₃ zugegeben. Die Zusätze werden entsprechend dem pH-Wert zugeführt so daß die Entschlackerflüssigkeit einen pH-Wert kleiner 11, insbesondere von 10,5 bis 7, oder noch besser zwischen 10,5 und 9,5, erreicht.

Anstelle der genannten Zusätze kann aber auch ein CO₂-hältiges Abgas, insbesondere gereinigtes Abgas aus der Verbrennung, mit 3 bis 15 %-CO₂-Gehalt verwendet werden, wobei dieses Gas einem Wäscher zugeführt wird, der als Waschflüssigkeit die im Entschlacker verwendete Flüssigkeit verwendet. Wesentlich ist ferner, daß die Zugabe der Puffersubstanzen hauptsächlich bei der Verwendung von Hydrogenkarbonaten wie z.B. Speisesoda in Abhängigkeit des p-m-Wertes erfolgt.

## Patentansprüche

1. Verfahren zur Umwandlung und gleichzeitiger Immobilisierung von wasserlöslichen Schwermetallverbindungen, wie z. B. Bleiverbindungen, in im Flüssigkeitsbad eines Entschlackers abgekühlten Schlacken in in Wasser schwer- und nichtlösliche Schwermetallverbindungen, beispielsweise in einer Müllverbrennungsanlage, dadurch gekennzeichnet, daß dem Flüssigkeitsbad vor der Schlacken, insbesondere Schlackenabkühlung als chemische Puffer wirkende Zusätze zugeführt werden, die den pH-Wert der Flüssigkeit kleiner als 11, insbesondere zwischen 10,5 und 7 halten, wobei die Zusätze mit den gelösten und ungelösten löslichen Schwermetallverbindungen der Schlacken wie z. B. Oxiden oder Hydroxiden, schwerlösliche Verbindungen, wie Karbonate oder Sulfate bilden, die vorzugsweise als Sediment abgeschieden werden, daß die vom Flüssigkeitsbad des Entschlackers abgeführte Flüssigkeit in eine feststoffreiche und eine feststoffarme Fraktion, beispielsweise mittels eines Hydrozyklons, getrennt wird und die feststoffarme Fraktion in den Entschlacker rückgeführt wird.

2. Verfahren nach Anspruch 1, dadurch gekennzeichnet, daß als Zusatz Schwefelsäure, insbesondere Abfallschwefelsäure, verwendet wird.

3. Verfahren nach Anspruch 1, dadurch gekennzeichnet, daß als Zusatz Hydrogenkarbonate, wie z. B. NaHC0₃, KHC0₃, verwendet werden.

4. Verfahren nach Anspruch 1, dadurch gekennzeichnet, daß als Zusatz, insbesondere als Aufsättigung für die in den Entschlacker rückgeführte Flüssigkeit C0₂ oder C0₂-hältiges Gas, wie z. B. gereinigtes 3 bis 15 % C0₂-hältiges Rauchgas verwendet wird, das in einem Wäscher mit der feststoffarmen Fraktion in Kontakt gebracht und teilweise gelöst wird.

5. Verfahren nach Anspruch 1, dadurch gekennzeichnet, daß der karbonathältigen Flüssigkeit ein organisches Sulfid als Fällungsmittel, wie z. B. TMT15 zugesetzt und die ausgefällte Verbindung abgeschieden sowie die gereinigte Flüssigkeit in den Entschlacker rückgeführt wird.

6. Verfahren nach Anspruch 1, dadurch gekennzeichnet, daß dem dem Flüssigkeitsbad des Entschlackers entnommenen Feststoff zusätzlich eine CO₂ und/oder karbonathältige Flüssigkeit, insbesondere im Bereich des Entschlacker-Abzuges, aufgesprüht wird, und die Flüssigkeit im Bereich des Flüssigkeitsbades entnommen wird.

7. Verfahren nach Anspruch 1, dadurch gekennzeichnet, daß die Zugabe der Puffersubstanzen, insbesondere von Speisesoda, in Abhängigkeit des pH-Wertes erfolgt, so daß beispielsweise eine höhere Speisesodadosierung bei höherem pH-Wert der Entschlackerflüssigkeit erfolgt.

8. Verfahren nach Anspruch 1, dadurch gekennzeichnet, daß die Zugabe des Puffersubstanzen, insbesondere von Speisesoda, in Abhängigkeit des p- und m-Wertes erfolgt.

## Claims

1. A process for the conversion and simultaneous immobilization of water-soluble heavy-metal compounds, for example lead compounds, in slag which has been cooled in the fluid bath of a deslagger into heavy-metal compounds which are not water-soluble or difficult to dissolve in water, for example in a refuse incinerator, **characterized in that**, prior to the delivery of slag, in particular the cooling of slag, the fluid bath is fed additives serving as chemical buffers with an pH value of the fluid of less than 11, in particular between 10.5 and 7, and that the additives with the dissolved and undissolved soluble heavy-metal compounds of the slags, for example oxides or hydroxides, form difficult to dissolve compounds, such as carbonates or sulfates, which are preferably discharged as sediment, and that the fluid discharged from the fluid bath of the deslagger is separated into a high-solids and a low-solids fraction, for example by means of a hydrocyclone, and that the low-solids fraction is fed back into the deslagger.

2. A process according to claim 1, **characterized in that** sulfuric acid, in particular waste sulfuric acid, is used as an additive.

3. A process according to claim 1, **characterized in that** hydrogen carbonates, for example NaHCO₃, KHCO₃, are used as an additive.

4. A process according to claim 1, **characterized in that** CO₂ or CO₂ containing gas, for example purified 3 to 15% CO₂ containing flue gas, which is in a washer put into contact with the low-solids fraction and partially dissolved, is used for the purpose of saturating fluid fed back into the deslagger.

5. A process according to claim 1, **characterized in that** an organic sulfide as a precipitation means, for example TMT 15, is added to the carbonated fluid, and that the saturated compound is discharged and the purified fluid is fed back into the deslagger.

6. A process according to Claim 1, **characterized in that** onto the solid removed from the fluid bath of the deslagger is sprayed, in particular in the region of the deslagger discharge, a CO₂ and/or carbonated liquid, and the liquid is removed in the area of the liquid bath.

7. A process according to Claim 1, **characterized in that** buffer substances, in particular feed soda, are added in dependence of the pH-value, so that for example a higher feed soda portion is delivered at a high pH-value of the deslagging liquid.

8. A process according to Claim 1, **characterized in that** buffer substances, in particular feed soda, are added in dependence of the p- and m-value.

## Revendications

1. Procédé pour transformer et, simultanément, immobiliser des composés de métaux lourds solubles dans l'eau, comme, par exemple, des composés de plomb contenus dans des crasses refroidies dans le bain liquide d'un décrasseur, en des composés de métaux lourds non solubles ou difficilement solubles dans l'eau, par exemple dans une installation d'incinération d'ordures,
caractérisé en ce qu'on ajoute au bain liquide, avant expédition des crasses, en particulier avant refroidissement des crasses, des additions agissant comme tampon chimique, qui maintiennent la valeur du pH du liquide en dessous de 11, en particulier entre 10,5 et 7, ces additions formant, avec les composés solubles de métaux lourds des crasses, dissous ou non dissous, comme des oxydes ou des hydroxydes, des composés difficilement solubles, comme des carbonates ou sulfates, qui sont, de préférence, précipités sous la forme de sédiments,
et en ce que le liquide soutiré du bain liquide du décrasseur est séparé en une fraction riche en solides et une fraction pauvre en solides, par exemple au moyen d'un hydrocyclone, et la fraction pauvre en solides est renvoyée dans le décrasseur.

2. Procédé suivant la revendication 1, caractérisé en ce que, comme addition, on utilise de l'acide sulfurique, en particulier de l'acide sulfurique de récupération.

3. Procédé suivant la revendication 1, caractérisé en ce que, comme addition, on utilise des hydrocarbonates, comme, par exemple, NaHCO₃, KHCO₃.

4. Procédé suivant la revendication 1, caractérisé en ce que, comme addition, en particulier comme saturateur pour le liquide renvoyé au décrasseur, on utilise du CO₂ ou un gaz contenant du CO₂, comme, par exemple, du gaz de fumées purifié, contenant 3 à 15% de CO₂, qui est mis en contact avec la fraction pauvre en solides et qui se dissout en partie.

5. Procédé suivant la revendication 1, caractérisé en ce qu'on additionne au liquide contenant des carbonates, comme moyen de précipitation, un sulfure organique, comme, par exemple, du TMT15, et on sépare le composé précipité, puis on renvoie le liquide purifié dans le décrasseur.

6. Procédé suivant la revendication 1, caractérisé en ce qu'un liquide contenant du Co₂ et/ou un carbonate est pulvérisé additionnellement, en particulier dans la zone de l'extraction du décrasseur, dans la matiére solide récupérée á partir du bain liquide du décrasseur et le liquide est prélevé dans la zone du bain liquíde.

7. Procédé suivant la revendication 1, caractérisé en ce que l'addition des substances agissant en tant que tampon, en particulier de la soude d'alimentation, est effectuée en fonction de la valeur du pH de telle tacon que par exemple un dosage de soude d'alimentation plus élevé corresponde a une valeur plus élevée du pH du liquide du décrasseur.

8. Procédé suivant la revendication 1, caractérisé en ce que l'addition des substances agissant en tant que tampon, en particulier de la soude d'alimentation, a lieu en fonction de la valeur p et m.
